# EUROPEAN PATENT SPECIFICATION

(11) **EP 3 470 754 B1**
(45) Date of publication and mention of the grant of the patent: **27.09.2023**
(21) Application number: 17813279.1
(22) Date of filing: 12.06.2017
(51) Int. Cl.: F24D 19/10

(54) **REFRIGERATION CYCLE DEVICE**
KÄLTEKREISLAUFVORRICHTUNG
DISPOSITIF À CYCLE DE RÉFRIGÉRATION

(30) Priority: 14.06.2016 JP 2016118132
(43) Date of publication of application: 17.04.2019
(73) Proprietor: Toshiba Carrier Corporation, Kawasaki-shi, Kanagawa 212-8585 (JP)
(72) Inventor: SHIMODA, Kazuma, Fuji-shi Shizuoka 416-8521 (JP); MORITA, Takeru, Fuji-shi Shizuoka 416-8521 (JP); IKEDA, Shingo, Fuji-shi Shizuoka 416-8521 (JP)
(74) Representative: Gramm, Lins & Partner Patent- und Rechtsanwälte PartGmbB
(86) International application number: PCT/JP2017/021705
(87) International publication number: WO 2017/217383

(56) References cited:
- WO-A1-2011/013672
- WO-A1-2011/013672
- WO-A1-2013/151005
- WO-A1-2013/151005
- DE-T5-112013 002 239
- JP-A- H06 235 554
- JP-A- S58 205 058
- JP-A- 2012 067 983
- JP-A- 2014 020 568
- JP-A- 2015 081 693
- JP-A- 2015 081 693
- JP-A- 2016 031 182
- US-A1- 2013 104 576

## Description

### Technical Field

Embodiments described herein relate generally to a refrigeration cycle device.

### Background Art

Regarding a refrigeration cycle device, the following technique is known. When a plurality of refrigerant circuits cooperate with each other to carry out alternate defrosting, in a refrigerant circuit which is adjacent to a refrigerant circuit carrying out a defrosting operation, and which is carrying out a heating operation such as indoor heating, hot-water supply or the like, a technique for, when a heat exchanger heating stage is reached, changing a rotational speed of a variable-speed air blower in such a manner as to turn down the air flow (for example, to an air flow of about 70% of that at the time of a heating operation of indoor heating or hot-water supply), and not spreading the surrounding atmosphere of a heat source side heat exchanger of the refrigerant circuit carrying out the defrosting operation so that the defrosting operation can be finished quickly or earlier and that a normal hot-water supplying operation can be carried out to thereby carry out an operation efficient in terms of the whole refrigeration cycle device is known.

WO 2011/013672 A1 discloses a refrigeration cycle device comprising a plurality of refrigeration cycle units each of which is constituted by arranging a plurality of circuits each including an air blower, and an air heat exchanger in the longitudinal direction. The refrigeration cycle units are arranged in such a manner that the refrigeration cycle units are adjacent to each other in the lateral direction.

WO 2013/151005 A1 discloses a composite dual refrigeration cycle device comprising two high-temperature side refrigeration circuits respectively having water/refrigerant heat exchangers for heat exchange of water and a refrigerant discharged from a compressor on the high-temperature side, and two low-temperatures side refrigeration circuits respectively having evaporators comprising air heat exchangers having blower fans. The circuits being built into the same chassis. This refrigeration cycle device is configured such that the two low-temperature side refrigeration circuits are connected to a control device, and when one of the low-temperature side refrigeration circuits perform a defrosting operation the other low-temperature side refrigeration circuit is controlled so as to perform heat exchange with a cascade heat exchanger.

### Summary of Invention

### Technical Problem

With a conventional refrigeration cycle device, although it is possible to quickly finish the defrosting operation, the rotational speed of the variable-speed air blower associated with the indoor heating/hot-water supplying operation is changed in such a manner that the air flow is tuned down, and hence the thermal capability of the heat exchanging unit (hereinafter referred to as a circuit) is lowered.

When this technique is applied to a refrigeration cycle device in which a plurality of refrigeration cycle units each of which includes a plurality of refrigeration cycle circuits are provided, it is possible to finish a defrosting operation of one circuit of a refrigeration cycle unit earlier on the one hand, a problem that the operating ability of the surrounding circuits of the circuit concerned is lowered arises on the other hand.

An embodiment described herein aims to obtain a refrigeration cycle device capable of making both of finishing a defrosting operation earlier and not lowering the operating ability of surrounding circuits compatible with each other.

### Solution to Problem

A refrigeration cycle device of Claim 1 includes a plurality of refrigeration cycle units each of which is constituted by arranging a plurality of circuits each including an air blower, first controller configured to control the air blower, and air heat exchanger in the longitudinal direction, and second controller configured to control the plurality of first controllers, and the refrigeration cycle units are arranged in such a manner that the refrigeration cycle units are adjacent to each other in the lateral direction. Further, the refrigeration cycle device is characterized in that when a defrosting operation is carried out by each circuit while the refrigeration cycle device is in operation, the second controller rotates the air blower of the circuit made to execute the defrosting operation at a rotational speed lower than a rotational speed of an air blower included in each of the surrounding circuits.

### Brief Description of Drawings

FIG. 1 is a view showing an external appearance of an air-cooling type heat pump chilling device according to an embodiment.
FIG. 2 is a view for explaining the internal configuration of an upper structure of the air-cooling type heat pump chilling device according to the embodiment.
FIG. 3 is a view showing an example of the control configuration of the air-cooling type heat pump chilling device according to the embodiment.
FIG. 4 is a view showing an example of the configuration of a first control unit according to the embodiment.
FIG. 5 is a flow chart showing an example of processing at the time of a defrosting operation according to the embodiment.
FIG. 6 is a view showing an example of a relationship between a wind velocity and indicated rotational speed at the time of presence/absence of a disturbance.
FIG. 7 is a view showing an example of a relationship between the temperature and fan rotational speed in a state where a disturbance is present according to the embodiment.
FIG. 8 is a view showing an example of a defrosting time at the time of a defrosting operation according to the embodiment.
FIG. 9 is a view showing an example of a defrosting time at the time of a defrosting operation according to the embodiment.
FIG. 10 is a view showing an example of a function of a case where a fan of a circuit at the time of a defrosting operation is not rotated.
FIG. 11 is a view showing an example of a function of a case where a fan of a circuit at the time of a defrosting operation is rotated.
FIG. 12 is a flowchart showing an example of processing at the time of a defrosting operation in a modified example of the embodiment.

### Mode for Carrying Out the Invention

An embodiment of the present invention will be described below with reference to the accompanying drawings.

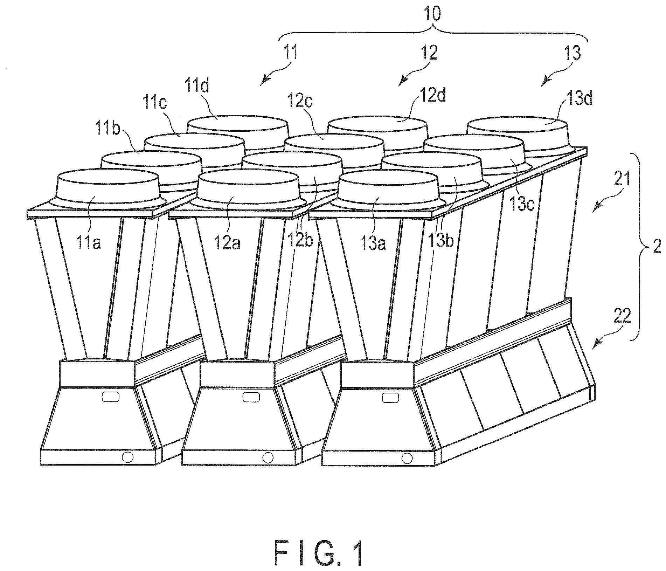

FIG. 1 is a perspective view of an air-cooling type heat pump chilling device 10 configured to create, for example, chilled water or warm water.

In the air-cooling type heat pump chilling device 10, three air-cooling type heat pump chilling units 11, 12, and 13 are arranged in such a manner that the units 11, 12, and 13 are adjacent to each other in the lateral direction. The air-cooling type heat pump chilling device 10 is an example of a refrigeration cycle device, and can be operated in both of a cooling mode and heating mode. It should be noted that in this embodiment, although the air-cooling type heat pump chilling device 10 will be described in connection with a case where the device 10 includes three air-cooling type heat pump chilling units 11, 12, and 13, the air-cooling type heat pump chilling device 10 may also be configured in such a manner as to include two or four or more air-cooling type heat pump chilling units. Further, the air-cooling type heat pump chilling device 10 is installed on a horizontal installation surface, for example, a rooftop terrace of a building.

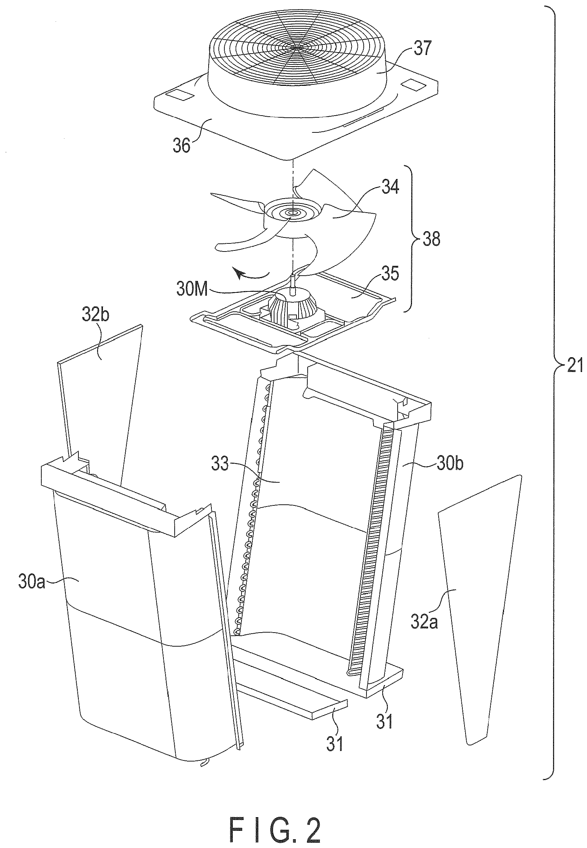

A housing 2 of the air-cooling type heat pump chilling unit is formed into an approximately box-like shape a depth dimension of which is remarkably greater than a width dimension. Here, the air-cooling type heat pump chilling unit of this embodiment is provided with four refrigeration cycle circuits each of which includes a compressor, four-way valve, outdoor heat exchangers (air heat exchangers 30a and 30b), expanding device, and utilization side heat exchanger (water heat exchanger) that are connected in sequence to each other through refrigerant piping. Further, the air-cooling type heat pump chilling unit is provided with four air blowers 38 (see FIG. 2) each of which is configured to send air to the air heat exchanger for each of the refrigeration cycle circuits. The housing 2 of this embodiment is constituted of an upper structure 21 and lower structure 22. The upper structures 21 are configured in such a manner that groups of four circuits 11a to 11d, 12a to 12d, and 13a to 13d each of which includes an air heat exchanger and air blower 38 for each refrigeration cycle circuit are respectively arranged in the longitudinal direction of the air-cooling type heat pump chilling units 11, 12, and 13.

FIG. 2 is a view for explaining an example of the internal structure of a circuit of the upper structure 21. Air heat exchangers 30a and 30b serving as outdoor heat exchangers are each supported on base plates 31 in a standing posture. The air heat exchangers 30a and 30b are opposed to each other with a gap held between them in the width direction of the housing 2, and are inclined in such directions that the air heat exchangers 31a and 30b are more separate from each other from below to above. Gaps between the edge parts of the air heat exchangers 30a and 30b are blocked up with a pair of closure plates 32a and 32b. Accordingly, the space surrounded by the closure plates 32a and 32b and air heat exchangers 30a and 30b constitutes an exhaust ventilation pathway 33 extending in the vertical direction.

The air blower 38 is constituted of a fan motor 30M, fan 34 to be attached to the fan motor 30M, and fan base 35 configured to support thereon the fan motor 30M. The fan 34 is supported at a position between upper end sections of the air heat exchangers 30a and 30b through the fan base 35 in such a manner as to be positioned at the upper end of the exhaust ventilation pathway 33. Furthermore, the fan 34 is covered with a top plate 36. The top plate 36 includes a cylindrical exhaust port 37 facing the fan 34.

In such an air heat exchanger section, when the fan 34 is driven in the direction indicated by an arrow in FIG. 2, the external air is passed through the air heat exchangers 30a and 30b and is sucked into the exhaust ventilation pathway 33. The external air sucked into the exhaust ventilation pathway 33 is sucked up toward the exhaust port 37 and is upwardly exhausted from the exhaust port 37.

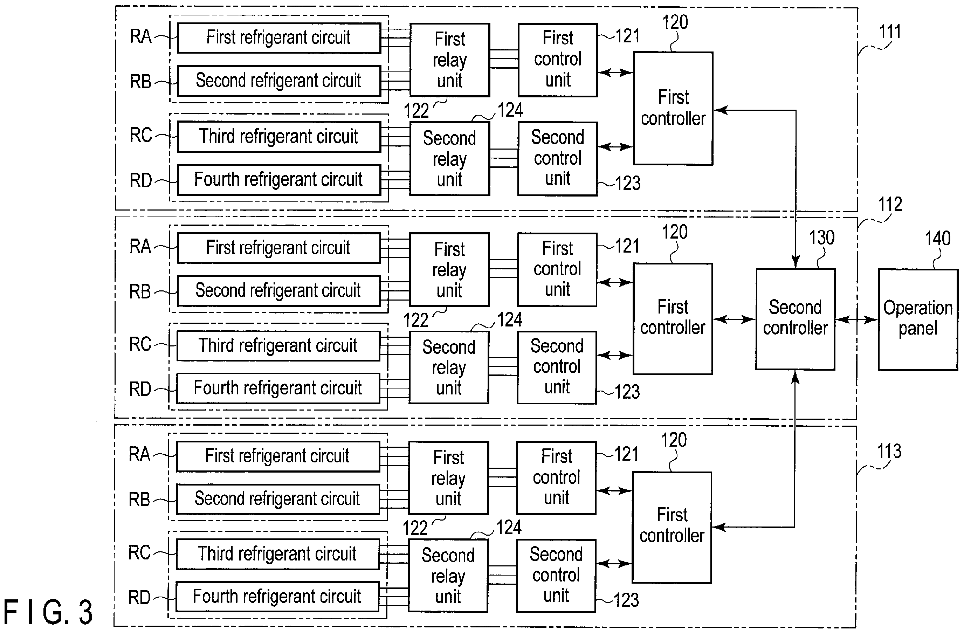

Next, an example of the control configuration of the air-cooling type heat pump chilling device 10 will be described below. As shown in FIG. 3, control sections 111, 112, and 113 are provided in such a manner as to be respectively correspondent to the air-cooling type heat pump chilling units 11, 12, and 13. It should be noted that common configurations included in the three control sections 111, 112, and 113 are denoted by identical reference symbols and their detailed descriptions are omitted.

Each of the control sections 111, 112, and 113 is provided with a first controller 120, first control unit 121, first relay unit 122, first refrigerant circuit RA, second refrigerant circuit RB, second control unit 123, second relay unit 124, third refrigerant circuit RC, and fourth refrigerant circuit RD. The control section 112 is provided with a second controller 130 in addition to these configurations. It should be noted that each of the first refrigerant circuit RA through the fourth refrigerant circuit RD includes elements necessary for a refrigeration cycle such as a compressor, heat exchanger, and the like.

As shown in FIG. 3, the first control unit 121 controls the first refrigerant circuit RA and second refrigerant circuit RB through the first relay unit 122 according to an instruction from the first controller 120.

Likewise, the second control unit 123 controls the third refrigerant circuit RC and fourth refrigerant circuit RD through the second relay unit 124 according to an instruction from the first controller 120.

The first relay unit 122 is an element configured to obtain information necessary at the time when, for example, the first refrigerant circuit RA and second refrigerant circuit RB are operated.

The second relay unit 124 is an element configured to obtain information necessary at the time when the third refrigerant circuit RC and fourth refrigerant circuit RD are operated.

The second controller 130 is connected to the first controller 120 in the control section 112, and is connected to both the first controllers 120 in the control sections 111 and 113. Furthermore, the second controller is connected to an operation panel 140. The second controller 130 outputs instructions to the three first controllers 120 on the basis of a condition set by the operator through the operation panel 140 and state or the like of a load (illustration omitted) connected to the air-cooling type heat pump chilling device 10 to thereby operate the air-cooling type heat pump chilling device 10 in the cooling mode or heating mode.

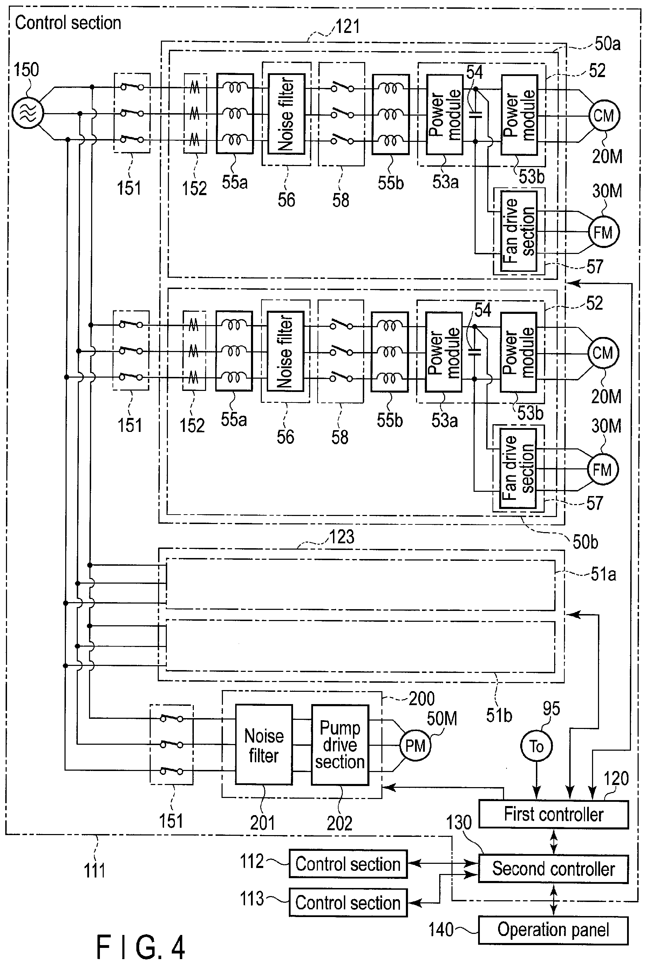

FIG. 4 is a view showing an example of the configuration of the first control unit 121. Each of the first control unit 121 and second control unit 123 has a configuration common to each of them. Accordingly, in this embodiment, the first control unit 121 will be described as a representative and, regarding the second control unit 123, elements and members of the second control unit 123 are denoted by reference symbols identical to those of the first control unit 121, and their descriptions are omitted.

The first control unit 121 includes a drive control circuit 50a configured to drive-control the first refrigerant circuit RA, and drive control circuit 50b configured to drive-control the second refrigerant circuit RB. The second control unit 123 includes a drive control circuit 51a configured to drive-control the third refrigerant circuit RC, and drive control circuit 51b configured to drive-control the fourth refrigerant circuit RD. These drive control circuits 50a, 50b, 51a, 51b, and a pump drive control circuit 200 are connected to a commercial three-phase AC source 150 through five circuit breakers 151.

It should be noted that each of the drive control circuits 50a, 50b, 51a, and 51b has a configuration common to each of them, the configuration of the drive control circuit 50a will be described below as a representative, and descriptions of the configurations of the drive control circuits 50b, 51a, and 51b are omitted.

The first control unit 121 is provided with a control board 52 configured to control a voltage and frequency to be applied to a compressor (illustration omitted) of the first refrigerant circuit RA, and various electrical components such as a power module (converter) 53a, power module (inverter) 53b, and smoothing capacitor 54 which are mounted on the control board 52, reactors 55a and 55b for power-factor improvement, filter board (noise filter) 56, fan control board (inverter) 57, electromagnetic contactor 58, and the like.

Further, the first control unit 121 is provided with a control board 52 configured to control a voltage and frequency to be applied to a compressor (illustration omitted) of the second refrigerant circuit RB, and various electrical components such as a power module (converter) 53a, power module (inverter) 53b, and smoothing capacitor 54 which are mounted on the control board 52, reactors 55a and 55b for power-factor improvement, filter board (noise filter) 56, fan control board (inverter) 57, electromagnetic contactor 58, and the like.

The drive control circuit 50a introduces an AC voltage input thereto from the commercial three-phase AC source 150 through the circuit breaker 151 into the power module (converter) 53a on the control board 52 through the reactor 55a, filter board (noise filter) 56, electromagnetic contactor 58, and reactor 55b, applies a DC voltage obtained by boosting and rectifying the introduced AC voltage by means of the power module 53a to the smoothing capacitor 54, converts the DC voltage created across the smoothing capacitor 54 into a three-phase AC voltage of a predetermined frequency and level corresponding to the frequency by means of the power module on the control board 52, outputs the three-phase AC voltage to the compressor motor 20M as drive electric power, at the same time, converts the DC voltage created across the smoothing capacitor 54 into a three-phase AC voltage of a predetermined frequency and level corresponding to the frequency by means of the fan control board (inverter) 57, and outputs the three-phase AC voltage to the fan motor 30M as drive electric power. Further, the fan control board 57 can detect a rotational speed based on a change in the current of the fan motor 30M, and can detect that the fan 30 rotates in the reverse direction (direction of sucking the external air). The fan control board 57 is contrived in such a manner that the board 57 can carry out detection on the basis of, for example, a system for detecting a rotational speed by subjecting the motor current to a vector operation or on the basis of a voltage waveform output from the fan motor 30M. As the detecting system of reverse rotation of the fan motor 30M, other systems may also be employed. It should be noted that a current sensor 152 is arranged in the phase power lines between the circuit breaker 151 and reactor 55a.

The pump drive control circuit 200 introduces an AC voltage input thereto from the commercial three-phase AC source 150 through the circuit breaker 151 into a pump drive section (converter and inverter) 202 through a noise filter 201, and outputs drive electric power (three-phase AC voltage) for a pump motor 50M from the pump drive section 202.

To the first controller 120, the second controller 130, an outside air temperature sensor 95, and the like are connected. The outside air temperature sensor 95 senses the temperature To of the external air.

To the second controller 130, the operation panel 140, and control sections 112 and 113 are connected. Further, the second controller 130 collectively controls the operation of the air-cooling type heat pump chilling device 10 through the three first controllers 120, and includes the following means as a principal function associated with the defrosting operation.

The means described above is means for, when one of the circuits is made to carry out a defrosting operation while the air-cooling type heat pump chilling device 10 is in operation, rotating a fan 34 included in the one circuit made to carry out the defrosting operation at a rotational speed lower than fans included in the surrounding circuits.

Further, more specifically, upon detection of the fact that the fan 34 is rotating in a direction in which the external air is sucked in, the means makes the fan rotate at the aforementioned low rotational speed. This detection is executed by detecting means for detecting whether or not a fan 34 included in a circuit made to carry out a defrosting operation is rotating in a direction in which the external air is sucked in.

Furthermore, the detecting means detects the rotation in the direction in which the external air is sucked in according to a change in current value occurring on the basis of the rotation of the fan. In this embodiment, the detecting means is the fan control board 57.

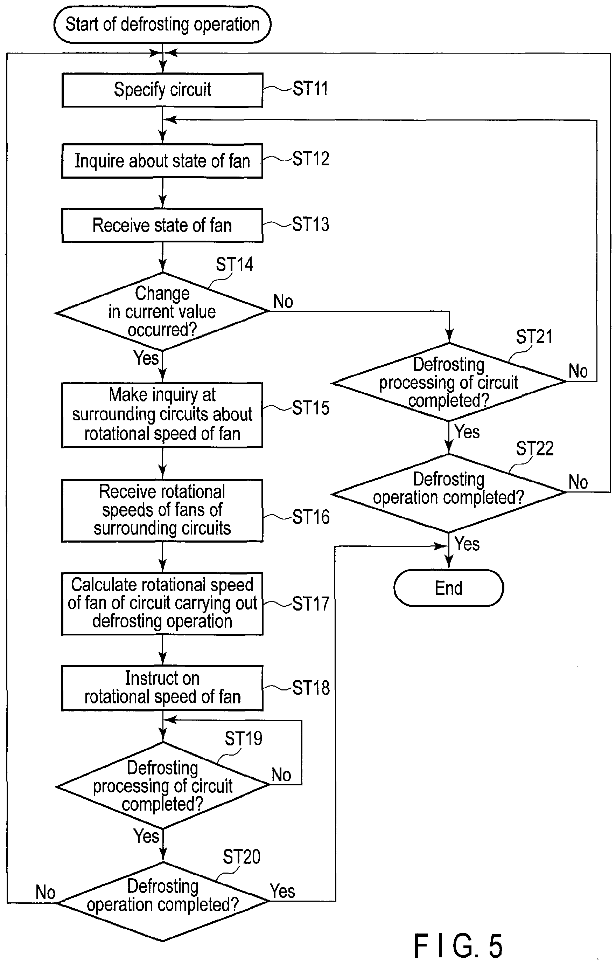

Next, processing of carrying out a defrosting operation for each circuit while the air-cooling type heat pump chilling device 10 is in operation will be described below. FIG. 5 is a flowchart showing an example of defrosting operation processing to be executed by the second controller 130.

When a defrosting operation is started while the air-cooling type heat pump chilling device 10 is in operation, the second controller 130 specifies a circuit to be made to carry out the defrosting operation (ST11). For example, in a case of setting for carrying out defrosting of a circuit on the basis of order set in advance, the circuit to be made to carry out a defrosting operation is specified on the basis of the setting. Hereinafter, a description will be given in connection with a case where a circuit 12b carries out the defrosting operation.

Then, the second controller 130 inquires of the first controller 120 of the specified circuit 12b about the state of the fan 34 (ST12). Here, the inquiry contents include information about whether or not the aforementioned change in current value to be detected by the fan control board 57 has occurred. Upon receipt of this inquiry, the first controller 120 determines whether or not the fan control board 57 has detected a change in current value, and transmits information including whether or not a change in current value has occurred to the second controller 130 as information about the state of the fan.

Upon receipt of the information about the state of the fan from the first controller 120 (ST13), the second controller 130 determines, on the basis of the received information about the state of the fan, whether or not a change in current value has occurred (ST14).

Upon determination that a change in current value has occurred (ST14: YES), the second controller 130 makes an inquiry to the first controller 120 of each of the surrounding circuits not executing the defrosting operation 11a to 11c, 12a, 12c, 12d, and 13a to 13c (ST15). The inquiry includes an inquiry about the rotational speed of the fan 34. Upon receipt of the inquiry, each of the first controllers 120 transmits information about the rotational speed of the fan 34 to the second controller 130.

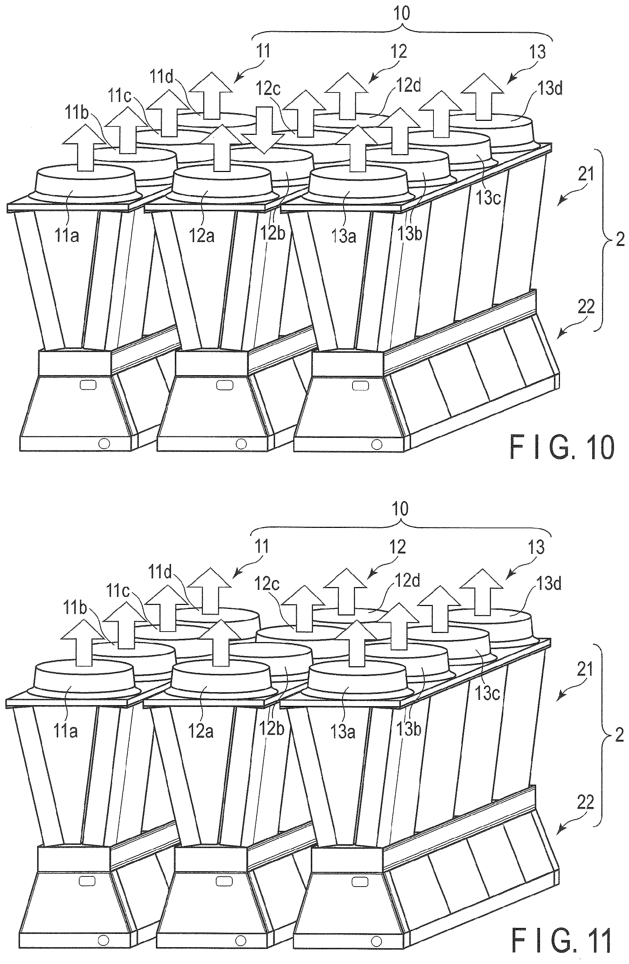

Upon receipt of the information items about the rotational speeds of the fans 34 of the surrounding circuits 11a to 11c, 12a, 12c, and 13a to 13c (ST16), the second controller 130 calculates a rotational speed lower than the rotational speeds of the fans 34 of the surrounding circuits 11a to 11c, 12a, 12c, and 13a to 13c (ST17), and instructs the first controller 120 of the circuit which is carrying out the defrosting operation on the calculated rotational speed (ST18). Here, the circuits 11b and 13b adjacent to the circuit 12b which is carrying out the defrosting operation take in the external air from the lateral face sides of the circuit 12b by means of the air heat exchangers 30a and 30b and upwardly exhaust the air from the exhaust ports 37. Due to this influence, the air inside the circuit 12b which is carrying out the defrosting operation is sucked into the adjacent circuits 11b and 13b through the air heat exchangers 30a and 30b, the air pressure inside the exhaust ventilation pathway 33 of the circuit 12b becomes negative, the external air is taken in as shown in FIG. 10, and a wind is created in the air-suction direction. In order to cancel out the wind, a rotational speed of the fan 34 lower than the fans 34 of the surrounding circuits 11a to 11c, 12a, 12c, and 13a to 13c is calculated, and the fan 34 is rotated at the calculated rotational speed. Thereby, as shown in FIG. 11, it is possible to prevent the circuit 12b from sucking the external air into the circuit 12b. As described above, the second controller 130 can rotate the fan 34 of the circuit 12b according to the operational state of the surrounding circuits.

It should be noted that as described above already, the circuits 11b and 13b adjacent to the circuit 12b most strongly influence the wind occurring in the exhaust ventilation pathway 33 of the circuit 12b, and hence when the rotational speed of the fan 34 of the circuit 12b is to be calculated, the specific gravity may be made higher. On the other hand, the circuits 12a and 12c do not influence the wind occurring in the exhaust ventilation pathway 33 of the circuit 12b, and hence when the rotational speed of the fan 34 of the circuit 12b is to be calculated, the specific gravity may be made lower.

Further, in the case where the rotational speed calculated from the rotational speeds of the fans 34 of the surrounding circuits 11a to 11c, 12a, 12c, and 13a to 13c is a rotational speed lower than the predetermined threshold, it is a case where although a change in current value is detected, the flow rate of the wind in the exhaust ventilation pathway 33 is not so high, and hence the second controller 130 may be configured not to rotate the fan 34.

Next, the second controller 130 determines whether or not the defrosting processing of the circuit 12b has been completed (ST19). When the defrosting processing has not been completed yet (ST19: NO), the second controller 130 enters a standby state.

When the defrosting processing of the circuit 12b has been completed (ST19: YES), the second controller 130 determines whether or not the defrosting operation has been completed (ST20). That is, the second controller determines whether or not the defrosting operation has already been carried out with respect each of all the circuits 11a to 11d, 12a to 12d, and 13a to 13d. When the defrosting operation has not been completed yet (ST20: NO), the second controller 130 executes the processing of step ST11 and steps subsequent to step ST11. When the defrosting operation has been completed (ST20: YES), the second controller 130 terminates the processing.

Further, when a change in current value does not occur in step ST14 (ST14: NO), the second controller 130 determines whether or not the defrosting processing of the circuit 12b has been completed (ST21). When the defrosting processing has not been completed yet (ST21: NO), the second controller 130 executes the processing of step ST12 and steps subsequent to ST12.

When the defrosting processing of the circuit 12b has been completed (ST21: YES), the second controller 130 determines whether or not the defrosting operation has been completed (ST22). When the defrosting operation has not been completed yet (ST22: NO), the second controller 130 executes the processing of step ST11 and steps subsequent to ST11. When the defrosting operation has been completed (ST22: YES), the second controller 130 terminates the processing.

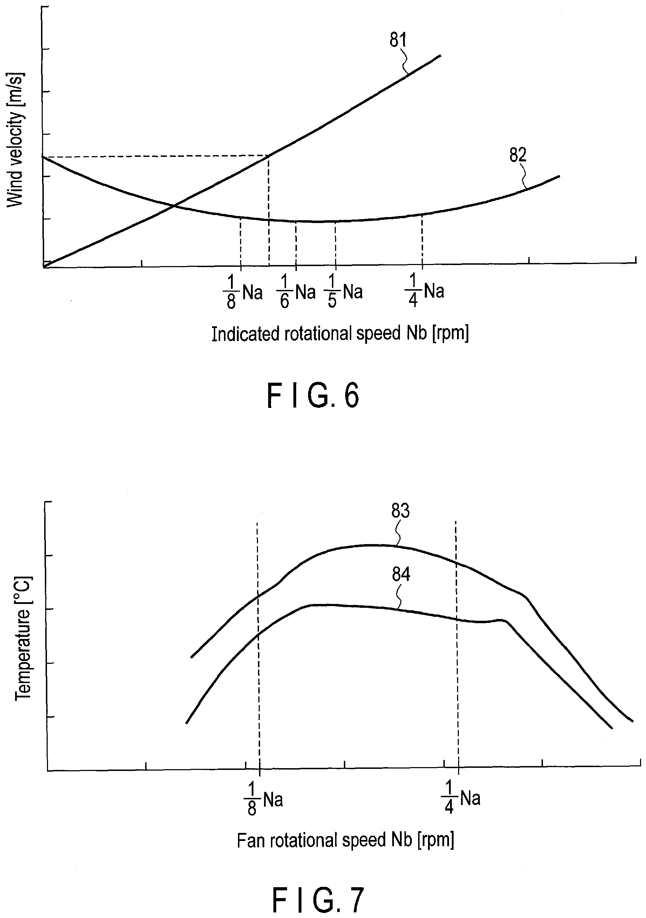

FIG. 6 is a view showing an example of a relationship between a wind velocity of a wind passing through the exhaust ventilation pathway 33 of the circuit 12b shown in FIG. 1 and indicated rotational speed of the fan 34 of the circuit 12b. The graph 81 shows changes in wind velocity at the time of absence of a disturbance, and graph 82 shows changes in wind velocity at the time of presence of a disturbance. Here, the disturbance implies an event in which a negative pressure is created in the exhaust ventilation pathway 33 in the circuit 12b due to the operations of the circuits 11a to 11c, 12a, 12c, and 13a to 13c surrounding the circuit carrying out the defrosting operation. A description will be given below assuming that the indicated rotational speed of each of the fans 34 of the surrounding circuits 11a to 11c, 12a, 12c, and 13a to 13c is, for example, Na, and indicated rotational speed of the fan of the circuit carrying out the defrosting operation is Nb. As shown by the graph 81, when there is no disturbance, the relationship shows that the indicated rotational speed and wind velocity increase in proportion to each other. Conversely, in the case where there is a disturbance, the relationship shows that when the indicated rotational speed is increased, the wind velocity lowers little by little, reaches the minimum in the vicinity of a point at which Nb is identical to 1/6Na (Nb=1/6Na) and, thereafter rises little by little, but does not exceed the wind velocity of a case where the indicated rotational speed is zero. That is, when there is a disturbance, if the fan is rotated at an indicated rotational speed of about 1/6Na (Nb=1/6Na) (from 1/8Na to 1/4Na), it is possible to prevent the wind flow rate inside the exhaust ventilation pathway 33 from becoming high. Accordingly, for example, in the winter season, the cold external air is prevented from being sucked into the exhaust ventilation pathway 33.

FIG. 7 is a view showing an example of a relationship between the temperature at the time when the air-cooling type heat pump chilling device 10 is carrying out a cooling operation and fan rotational speed of the fan 34. The graph 83 shows a relationship between the condensation temperature and fan rotational speed, and graph 84 shows a relationship between the evaporation temperature and fan rotational speed.

As shown by both the graphs 83 and 84, when the fan rotational speed Nb is about 1/6Na (from 1/8Na to 1/4Na), the temperature becomes high. That is, the graphs 83 and 84 show that when a disturbance occurs for the reason that the surrounding circuits are operated in the heating mode, if the fan 34 is operated at a rotational speed of about 1/6Na, the temperature of the device included in the refrigerant circuit, more specifically, both the condensation temperature and evaporation temperature become high, whereby defrosting is facilitated.

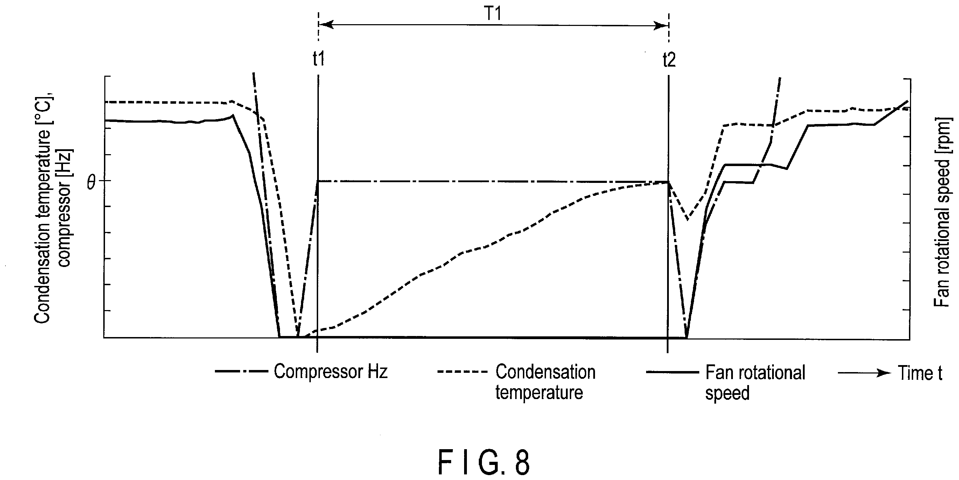

FIG. 8 is a view showing an example of a relationship between the frequency of the compressor included in the refrigerant circuit and condensation temperature of a case where the fan rotational speed at the time of a defrosting operation is zero. The defrosting operation period T1 is the time from the defrosting operation start time t1 to the time t2 at which the condensation temperature has reached a predetermined temperature θ that enables defrosting to be regarded as having been completed.

Throughout the defrosting operation period T1, the fan rotational speed is zero, in this state, the condensation temperature rises little by little from the defrosting operation start time t1 and, when the defrosting completion time t2 is reached, the defrosting temperature reaches the predetermined temperature and defrosting is completed.

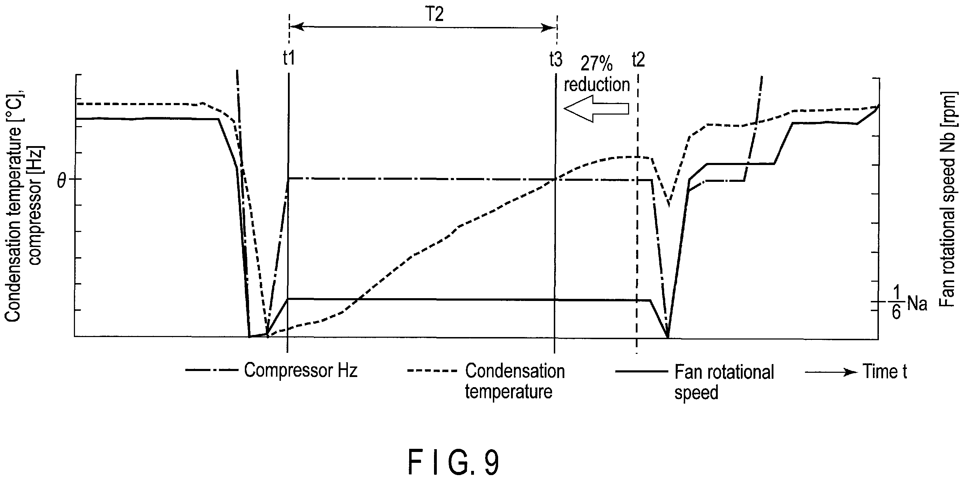

Conversely, FIG. 9 is a view showing an example of a relationship between the frequency of the compressor included in the refrigerant circuit and condensation temperature of a case where the fan at the time of a defrosting operation is rotated at a fan rotational speed Nb (=1/6Na) lower than the fan rotational speed Na of the surrounding circuits carrying out heating mode operations on condition that the frost formation amount and ambient temperature are identical to the example shown in FIG. 8. The defrosting operation period T2 is the time from the defrosting operation start time t1 to the defrosting completion temperature attainment time t3.

Throughout the defrosting operation period T2, the fan rotational speed Nb is 1/6Na, and the compressor operates at a fixed rotational speed. In this state, the condensation temperature rises little by little from the defrosting operation start time t1, and reaches the predetermined temperature θ of defrosting completion at a point in time of t3 earlier than t2. This defrosting completion temperature attainment time t3 is made significantly (for example, 27%) earlier than the defrosting completion time t2 shown in FIG. 8. That is, it is shown that it is possible to significantly shorten the defrosting operation period by rotating the fan 34 of the circuit carrying out a defrosting operation at a rotational speed lower than the rotational speeds of the fans 34 of the surrounding circuits carrying out heating mode operations. In other words, when a disturbance occurs around the circuit carrying out a defrosting operation, it is possible to shorten the defrosting time without surplus heat radiation by carrying out an operation of canceling out the disturbance at a fixed rotational speed without stopping the fan.

According to the air-cooling type heat pump chilling device 10 configured in the manner described above, when the circuit 12b is made to operate a defrosting operation while the device 10 is in operation, the second controller 130 rotates the fan 34 included in the circuit 12b executing the defrosting operation at a rotational speed lower than the rotational speeds of the fans included in the surrounding circuits 11a to 11c, 12a, 12c, and 13a to 13c. Accordingly, a negative pressure is created in the exhaust ventilation pathway 33, whereby it is possible to cancel out the wind drawn from outside, and hence the air-cooling type heat pump chilling device 10 can make both of finishing the defrosting operation earlier by enabling the condenser to be warmed up quickly, and not lowering the operating ability of the surrounding circuits 11a to 11c, 12a, 12c, and 13a to 13c compatible with each other.

Further, after detecting a change in current value, the second controller 130 acquires the rotational speeds of the surrounding circuits 11a to 11c, 12a, 12c, and 13a to 13c, and specifies the rotational speed of the fan 34 of the circuit 12b on the basis of the acquired rotational speeds, and hence the second controller 130 can rotate the fan 34 of the circuit 12b at a rotational speed commensurate with the operational state of the air-cooling type heat pump chilling device 10. It should be noted that in this embodiment, although the description has been given in connection with the case where, when a change in current value is detected, the rotational speed of the fan is calculated on the basis of the rotational speeds of fans of the surrounding circuits, it is also possible to contrive the configuration in such a manner as to rotate the fan at a rotational speed set in advance when a change in current value is detected.

Furthermore, in the embodiment described above, in step ST15 through ST18, when the rotational speed of the fan 34 of the circuit 12b is specified, although the processing in which the fan 34 operates at the same rotational speed until the defrosting operation of the circuit 12b is completed has been described, the processing is not limited to this. For example, when the defrosting operation of the circuit 12 has not been completed yet (step ST19: NO), if the configuration is contrived in such a manner that the processing flow returns to the processing of step ST15 at predetermined intervals, it becomes possible to set the rotational speed of the fan 34 of the circuit 34 at the predetermined intervals, and further it becomes possible to set a fan rotational speed commensurate with the operational state of the air-cooling type heat pump chilling device 10.

### (Modified Example)

This modified example differs from the aforementioned embodiment in that the second controller 130 controls the fan 34 not on the basis of whether or not a change in current value has been detected, and the second controller 130 controls the fan of the circuit carrying out the defrosting operation on the basis of the rotational states of the fans of the surrounding circuits not carrying out the defrosting operations. Further, configurations identical to the aforementioned embodiment are denoted by reference symbols identical to the embodiment and their detailed descriptions are omitted.

The second controller 130 in this modified example includes the following means.

That is, the second controller includes means for acquiring information about a rotational speed of a fan from a first controller included in each of circuits surrounding a circuit executing a defrosting operation, and determining a rotational speed of a fan included in the circuit executing the defrosting operation on the basis of the acquired rotational speeds of the fans.

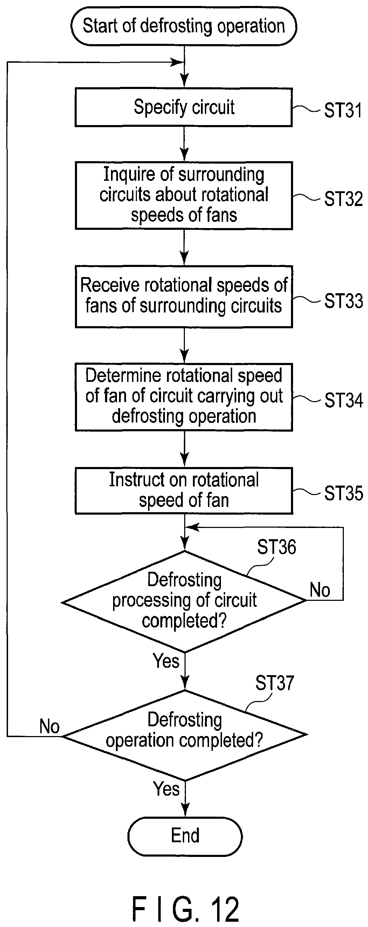

FIG. 12 is a flowchart showing an example of defrosting operation processing to be executed by the second controller 130 in this modified example. In this modified example too, the description will be given in connection with the case where the circuit 12b carries out a defrosting operation.

When the defrosting operation is started, the second controller 130 specifies the circuit 12b to be made to carry out the defrosting operation (ST31). Thereafter, the second controller 130 makes an inquiry to the first controller 120 of each of the surrounding circuits 11a to 11c, 12a, 12c, and 13a to 13c not executing the defrosting operations (ST32). This inquiry includes information about the rotational speed of the fan 34. Upon receipt of this inquiry, each of the first controllers 120 transmits information about the rotational speed of the fan 34 to the second controller 130.

Upon receipt of the information about the rotational speed of the fan 34 of each of the surrounding circuits 11a to 11c, 12a, 12c, and 13a to 13c (ST33), the second controller 130 determines a rotational speed lower than the rotational speeds of the fans 34 of the surrounding circuits 11a to 11c, 12a, 12c, and 13a to 13c (ST34). This determination of the rotational speed is carried out in, for example, the following manner. When the circuit 12b is carrying out the defrosting operation, a correspondence relationship between the rotational speed of the fan 34 of each of the surrounding circuits 11a to 11c, 12a, 12c, and 13a to 13c and rotational speed of the fan 34 of the circuit 12b carrying out the defrosting operation, i.e., correspondence information indicating a relationship making it possible to cancel out the external air sucked into the exhaust ventilation pathway 33 of the circuit carrying out the defrosting operation by the wind created by the rotation of the fan 34 is retained by the second controller 130. Then, the second controller 130 utilizes the rotational speeds of the fans 34 of the surrounding circuits 11a to 11c, 12a, 12c, and 13a to 13c received in step ST33 and correspondence information to thereby determine the rotational speed of the fan 34 of the circuit 12b carrying out the defrosting operation.

The second controller 130 instructs the first controller 120 of the circuit carrying out the defrosting operation on the rotational speed determined in the manner described above (ST35).

Next, the second controller 130 determines whether or not the defrosting processing of the circuit has been completed (ST36). When the defrosting processing has not been completed yet (ST36: NO), the second controller 130 enters a standby state and, when the defrosting processing of the circuit has been completed (ST36: YES), the second controller 130 determines whether or not the defrosting operation has been completed (ST37). When the defrosting operation has not been completed yet (ST37: NO), the second controller 130 executes the processing of step ST31 and steps subsequent to step ST31. When the defrosting operation has been completed (ST37: YES), the second controller 130 terminates the processing.

When the air-cooling type heat pump chilling device 10 is configured in the manner described above too, it is possible for the air-cooling type heat pump chilling device 10 to make both of finishing the defrosting operation of the circuit 12b earlier, and not lowering the operating ability of the surrounding circuits 11a to 11c, 12a, 12c, and 13a to 13c compatible with each other.

It should be noted that in the above modified example, in step ST 31 through ST35, when the rotational speed of the fan 34 is determined, although the processing in which the fan 34 operates at the same rotational speed until the defrosting operation of the circuit 12b is completed has been described, the processing is not limited to this. For example, when the defrosting operation of the circuit 12b has not been completed yet (step ST36: NO), if the configuration is contrived in such a manner that the processing flow returns to the processing of step ST32 at predetermined intervals, it becomes possible to set the rotational speed of the fan 34 at the predetermined intervals, this being identical to the embodiment described above.

Further, in the embodiment described above, although the fan rotational speeds of the circuits carrying out heating mode operations around the circuit carrying out the defrosting operation are detected, a rotational speed of a representative fan or average rotational speed of the fans of the circuits carrying out the heating mode operations may also be detected.

Further, in the embodiment and modified example described above, although the descriptions have been given assuming that the second controller 130 is an element physically different from the first controller 120, the configuration may also be contrived in such a manner that one of the first controllers 120 realizes the functions of the first controller 120 and second controller 130. In other words, the second controller 130 may be included in one of the plurality of first controllers 120.

While certain embodiments have been described, these embodiments have been presented by way of example only, and are not intended to limit the scope of the inventions.

### Reference Signs List

10 ··· air-cooling type heat pump chilling device, 11, 12, 13 ··· air-cooling type heat pump chilling unit, 11a to 11d, 12a to 12d, 13a to 13d ··· circuit, 21 ··· upper structure, 30a, 30b ··· air heat exchanger, 34 ··· fan, 38 ··· air blower, 57 ··· fan control board, 120 ··· first controller, and 130 ··· second controller.

## Claims

1. A refrigeration cycle device (10) comprising:
in a longitudinal direction, a plurality of refrigeration cycle units (11,12,13) each of which is constituted by arranging a plurality of circuits (11a~11d,12a~12d,13a~13d) each including an air blower (38), and an air heat exchanger; wherein the refrigeration cycle units (11,12,13) are arranged in such a manner that the refrigeration cycle units (11,12,13) are adjacent to each other in a lateral direction , **characterized in that**
the plurality of circuits (11a~11d,12a~12d,13a~13d) each include a first controller (120) configured to control the air blower (38),
the refrigeration cycle device (10) further comprises a second controller (130) configured to control the plurality of first controllers (120), and
when a defrosting operation is carried out by each circuit (11a~11d,12a~12d,13a~13d) while the refrigeration cycle device (10) is in operation,
the second controller (130) is configured to rotate the air blower (38) of the circuit (11a~11d,12a~12d,13a~13d) made to execute the defrosting operation at a rotational speed lower than a rotational speed of an air blower (38) included in each of the surrounding circuits (11a~11d,12a~12d,13a~13d) .

2. The refrigeration cycle device (10) of Claim 1, **characterized by** further comprising detecting means for detecting whether or not the air blower (38) included in the circuit (11a~11d,12a~12d,13a~13d) carrying out the defrosting operation is rotating while the defrosting operation is executed, wherein
when it is detected that the air blower (38) is rotating, the second controller (130) is configured to rotate the air blower (38) at the lower rotational speed.

3. The refrigeration cycle device (10) of Claim 2, **characterized in that**
the detecting means detects whether or not the air blower (38) is rotating in a direction in which the external air is taken in according to a change in current value occurring on the basis of rotation of the air blower (38).

4. The refrigeration cycle device (10) of Claim 1, **characterized in that**
the second controller (130) is configured to acquire the rotational speed of the air blower (38) of each of the surrounding circuits (11a~11d,12a~12d,13a~13d) from the first controller (120) included in each of the surrounding circuits (11a~11d,12a~12d,13a~13d), and to determine the rotational speed of the air blower (38) included in the circuit (11a~11d,12a~12d,13a~13d) executing the defrosting operation on the basis of the acquired rotational speeds of the air blowers (38).

5. The refrigeration cycle device of Claim 2 or Claim 4, **characterized in that**
the second controller (130)is configured to change the rotational speed of the air blower (38) included in the circuit (11a~11d,12a~12d,13a~13d) which is carrying out the defrosting operation according to the rotational state of the air blower (38) included in each of the surrounding circuits (11a~11d,12a~12d,13a~13d).

## Patentansprüche

1. Kühlkreislaufvorrichtung (10), aufweisend:
in einer Längsrichtung eine Mehrzahl von Kühlkreislaufeinheiten (11, 12, 13), von denen jede durch Anordnen einer Mehrzahl von Kreisläufen (11a~11d, 12a~12d, 13a~13d) gebildet ist, von denen jeder ein Luftgebläse (38) und einen Luftwärmetauscher enthält; wobei die Kühlkreislaufeinheiten (11, 12, 13) in einer solchen Weise angeordnet sind, dass die Kühlkreislaufeinheiten (11, 12, 13) in der Querrichtung benachbart zueinander sind, **dadurch gekennzeichnet, dass**
die mehreren Kreisläufe (11a~11d, 12a-12d, 13a~13d) jeweils einen ersten Regler (120) aufweisen, der zur Steuerung des Luftgebläses (38) konfiguriert ist,
die Kühlkreislaufvorrichtung (10) ferner einen zweiten Regler (130) aufweist, der so konfiguriert ist, dass er die Mehrzahl von ersten Reglern (120) steuert, und
wenn ein Abtauvorgang durch jeden Kreislauf (11a~11d, 12a~12d, 13a~13d) ausgeführt wird, während die Kühlkreislaufvorrichtung (10) in Betrieb ist,
die zweite Steuerung (130) so konfiguriert ist, dass sie das Luftgebläse (38) des Kreislaufs (11a~11d, 12a~12d, 13a~13d), der den Abtauvorgang ausführt, mit einer Drehzahl dreht, die niedriger ist als eine Drehzahl eines Luftgebläses (38), das in jedem der umgebenden Kreisläufe (11a~11d, 12a~12d, 13a~13d) enthalten ist.

2. Kühlkreislaufvorrichtung (10) nach Anspruch 1, **dadurch gekennzeichnet, dass** sie ferner Erfassungsmittel umfasst, um zu erfassen, ob das Luftgebläse (38), das in dem Kreislauf (11a~11d, 12a~12d, 13a~13d) enthalten ist, der den Abtauvorgang durchführt, sich dreht oder nicht, während der Abtauvorgang ausgeführt wird, wobei
wenn erkannt wird, dass sich das Luftgebläse (38) dreht, die zweite Steuerung (130) so konfiguriert ist, dass sie das Luftgebläse (38) mit der niedrigeren Drehzahl dreht.

3. Kühlkreislaufvorrichtung (10) nach Anspruch 2, **dadurch gekennzeichnet, dass**
die Erkennungseinrichtung erkennt, ob sich das Luftgebläse (38) in einer Richtung dreht, in der die Außenluft angesaugt wird, und zwar in Abhängigkeit von einer Änderung des Stromwertes, die aufgrund der Drehung des Luftgebläses (38) eintritt.

4. Kühlkreislaufvorrichtung (10) nach Anspruch 1, **dadurch gekennzeichnet, dass**
der zweite Regler (130) so konfiguriert ist, dass er die Drehgeschwindigkeit des Luftgebläses (38) jedes der umgebenden Kreisläufe (11a~11d, 12a~12d, 13a~13d) von dem ersten Regler (120) erfasst, der in jedem der umgebenden Kreisläufe (11a~11d, 12a~12d, 13a~13d) enthalten ist, und die Drehzahl des Luftgebläses (38) bestimmt, das in dem Kreislauf (11a~11d, 12a~12d, 13a~13d) enthalten ist, der den Abtauvorgang auf der Grundlage der erfassten Drehzahlen der Luftgebläse (38) ausführt.

5. Kühlkreislaufvorrichtung nach Anspruch 2 oder Anspruch 4, **dadurch gekennzeichnet, dass**
der zweite Regler (130) so konfiguriert ist, dass er die Drehzahl des Luftgebläses (38), das in dem den Abtauvorgang ausführenden Kreislauf (11a-11d, 12a-12d, 13a-13d) enthalten ist, entsprechend dem Drehzahlzustand des Luftgebläses (38) ändert, das in jedem der umgebenden Kreisläufe (11a-11d, 12a-12d, 13a-13d) enthalten ist.

## Revendications

1. Dispositif à cycle de réfrigération (10) comprenant :
dans une direction longitudinale, une pluralité d'unités à cycle de réfrigération (11, 12, 13) dont chacune est constituée en agençant une pluralité de circuits (11a~11d, 12a~12d, 13a~13d) comprenant chacun un ventilateur (38), et un échangeur thermique d'air ; dans lequel les unités à cycle de réfrigération (11, 12, 13) sont agencées de sorte que les unités à cycle de réfrigération (11, 12, 13) sont adjacentes les unes par rapport aux autres dans une direction latérale, **caractérisé en ce que** :
la pluralité de circuits (11a~11d, 12a~12d, 13a~13d) comprennent chacun un premier organe de commande (120) configuré pour commander le ventilateur (38),
le dispositif à cycle de réfrigération (10) comprend en outre un second organe de commande (130) configuré pour commander la pluralité de premiers organes de commande (120), et
lorsqu'une opération de dégivrage est réalisée par chaque circuit (11a~11d, 12a~12d, 13a~13d) alors que le dispositif à cycle de réfrigération (10) est en fonctionnement,
le second organe de commande (130) est configuré pour faire tourner le ventilateur (38) du circuit (11a~11d, 12a~12d, 13a~13d) fait pour exécuter l'opération de dégivrage à une vitesse de rotation inférieure à une vitesse de rotation d'un ventilateur (38) inclus dans chacun des circuits (11a~11d, 12a~12d, 13a~13d) périphériques.

2. Dispositif à cycle de réfrigération (10) selon la revendication 1, **caractérisé en ce qu'**il comprend en outre un moyen de détection pour détecter si le ventilateur (38) inclus dans le circuit (11a~11d, 12a~12d, 13a~13d) réalisant l'opération de dégivrage tourne ou pas alors que l'opération de dégivrage est exécutée, dans lequel :
lorsque l'on détecte que le ventilateur (38) tourne, le second organe de commande (130) est configuré pour faire tourner le ventilateur (38) à la vitesse de rotation inférieure.

3. Dispositif à cycle de réfrigération (10) selon la revendication 2, **caractérisé en ce que** :
le moyen de détection détecte si le ventilateur (38) tourne ou pas dans une direction dans laquelle l'air extérieur est prélevé selon un changement de valeur actuelle se produisant sur la base de la rotation du ventilateur (38).

4. Dispositif à cycle de réfrigération (10) selon la revendication 1, **caractérisé en ce que** :
le second organe de commande (130) est configuré pour acquérir la vitesse de rotation du ventilateur (38) de chacun des circuits (11a~11d, 12a~12d, 13a~13d) périphériques, du premier organe de commande (120) inclus dans chacun des circuits (11a~11d, 12a~12d, 13a~13d) périphériques, et pour déterminer la vitesse de rotation du ventilateur (38) inclus dans le circuit (11a~11d, 12a~12d, 13a~13d) exécutant l'opération de dégivrage sur la base des vitesses de rotation acquises des ventilateurs (38).

5. Dispositif à cycle de réfrigération selon la revendication 2 ou la revendication 4, **caractérisé en ce que** :
le second organe de commande (130) est configuré pour modifier la vitesse de rotation du ventilateur (38) inclus dans le circuit (11a~11d, 12a~12d, 13a~13d) qui réalise l'opération de dégivrage selon l'état de rotation du ventilateur (38) inclus dans chacun des circuits (11a~11d, 12a~12d, 13a~13d) périphériques.
